# EUROPÄISCHE PATENTANMELDUNG

(11) **EP 2 384 876 A1**
(43) Veröffentlichungstag der Anmeldung: **09.11.2011**
(21) Anmeldenummer: 10162299.1
(22) Anmeldetag: 07.05.2010
(51) Int. Cl.: B29C 41/00, B29C 41/04, B29C 41/22, B41C 1/18, B41F 13/11, B41F 27/12, B41M 1/10, B41N 1/22

(54) **Flexible Druckschicht für eine Druckform**

(71) Anmelder: Kesper Druckwalzen GmbH, 47809 Krefeld (DE)
(72) Erfinder: Kesper, Peer, 47800 Krefeld (DE)
(74) Vertreter: Cohausz & Florack

(57) **Zusammenfassung**

Die Erfindung betrifft eine Druckform für den Rotationsdruck, insbesondere für den flexiblen Tiefdruck, wobei die Druckform eine dauerklebende Klebeschicht (8) aufweist, wobei die dauerklebende Klebeschicht (8) zwischen einer Stützkonstruktion (2) und der Druckschicht (7) angeordnet ist. Weiter betrifft die Erfindung ein Verfahren zur Herstellung einer Druckform für den Rotationsdruck, eine flexible Druckschicht (7) für eine Druckform für den Rotationsdruck und ein Verfahren zur Herstellung einer flexiblen Druckschicht für den Rotationsdruck.

## Beschreibung

Die Erfindung betrifft eine Druckform für den Rotationsdruck, insbesondere für den flexiblen Tiefdruck, mit einer Stützkonstruktion, mit mindestens einer flexiblen Druckschicht, wobei die Druckschicht zur Eingravierung eines Druckmotivs geeignet ist, wobei die Druckschicht nahtlos ist. Außerdem betrifft die Erfindung ein Verfahren zur Herstellung einer erfindungsgemäßen Druckform, eine flexible Druckschicht für eine erfindungsgemäße Druckform sowie ein Verfahren zur Herstellung der flexiblen Druckschicht für eine erfindungsgemäße Druckform.

Druckformen für den Rotationsdruck und hierbei insbesondere für den flexiblen Tiefdruck sind aus dem Stand der Technik in einer Vielzahl von Ausgestaltungen bekannt. Den bekannten Druckformen ist gemeinsam, dass sie im Wesentlichen zylinderförmig sind und sich auf ihrer Umfangsfläche eine Druckschicht befindet, welche das jeweilige Druckmotiv aufnehmen soll. Die Druckform, über die sich die zu bedruckenden Objekte bewegen, ist beim Druckvorgang in einer Druckmaschine gelagert. Dabei wird zwangsläufig nach einiger Zeit ein Wechsel der Druckschicht notwendig, weil entweder ein anderes Druckmotiv zum Drucken verwendet werden soll oder durch Abnutzung der Druckschicht die Druckqualität nachlässt. Hierbei ist ein Austausch der gesamten Druckform kostspielig, da letztlich nur die Druckschicht ausgetauscht werden müsste und die restliche Mechanik der Druckform, insbesondere die Stützwalze, grundsätzlich weiterhin funktionsfähig ist.

Eine Druckform für den Rotationsdruck, insbesondere für den flexiblen Tiefdruck, mit einer Stützkonstruktion und mit einer flexiblen Druckschicht, wobei die Druckschicht zur Eingravierung eines Druckmotivs geeignet ist und wobei die Druckschicht nahtlos ist, ist aus dem deutschen Patent DE 10 2006 026 266 B4 grundsätzlich bekannt.

Diese Druckform weist eine auf der walzenförmigen Stützkonstruktion befindliche, elastische und schaumartige Trägerschicht sowie mindestens eine auf der Trägerschicht befindliche elastische Druckschicht auf. Eine derartige Druckform erlaubt das Entfernen der obersten Druckschicht für den Fall, dass diese außenliegende Druckschicht nicht mehr die geforderte Qualität aufweist oder das Druckmotiv gewechselt werden soll, wodurch die nächste, unmittelbar darunterliegende Druckschicht freigelegt wird und zum Drucken verwendet werden kann. Dadurch lässt sich die Druckform mehrfach verwenden, ohne ihren kompletten Austausch zu erfordern, wodurch Flexibilität gewonnen sowie eine Kostenersparnis erreicht wird.

Problematisch an einer derartigen Druckform ist, dass sich der effektive Außendurchmesser der Druckform insgesamt stets durch das sukzessive Entfernen der einzelnen Druckschichten verändert.

Ausgehend von den zuvor beschriebenen Problemen der aus dem Stand der Technik bekannten Druckformen liegt der erfindungsgemäßen Druckform die Aufgabe zugrunde, eine Druckform zur Verfügung zu stellen, welche auch nach mehrmaligem Wechsel des Druckmotivs den Einsatz der selben Grundwalze erlaubt.

Gemäß einer ersten Lehre der Erfindung wird die zuvor hergeleitete und aufgezeigte Aufgabe dadurch gelöst, dass die Druckform eine dauerklebende Klebeschicht aufweist, wobei die dauerklebende Klebeschicht zwischen der Stützkonstruktion und der Druckschicht angeordnet ist. Die Druckschicht wird durch Adhäsionskräfte auf der Klebeschicht fixiert.

Wenn nun die Druckqualität nachlässt oder das Druckmotiv gewechselt werden soll, wird die von der Klebeschicht separate Druckschicht entfernt. Zum Entfernen wird die Druckschicht von der Druckform abgezogen.

Anschließend wird eine andere Druckschicht, gegebenenfalls mit einem vom bisher verwendeten Druckmotiv vollkommen verschiedenen Druckmotiv, durch Überstülpen angebracht. Ein Verfahren zum Überstülpen beinhaltet das Ziehen der flexiblen Druckschicht in axialer Richtung über die Druckform.

Durch die Flexibilität der Druckschicht ist diese zerstörungsfrei verformbar um sie über die Druckform zu stülpen oder wieder von der Druckform zu entfernen. Die Druckschicht bietet aber gleichzeitig in übergestülptem Zustand ausreichend Spannung, um mit Hilfe der Klebeschicht fixiert zu werden und damit weiterhin ein präzises Drucken zu ermöglichen. Die Klebewirkung der Klebeschicht verhindert also ein unerwünschtes Verrutschen der Druckschicht.

Durch den Austausch der Druckschicht kann die Druckform mehrmals, wenn nicht gar unbegrenzt oft verwendet werden, da lediglich die äußere Druckschicht gewechselt werden muss und insbesondere die Stützwalze beibehalten werden kann. Vor und nach dem Austausch der Druckschicht weist die Druckform insgesamt denselben Durchmesser auf, so dass kein von dieser Größe abhängiger Parameter des Druckvorgangs wegen des Austauschs der Druckschicht geändert werden muss.

Die erfindungsgemäße Druckform weist eine walzenförmige Stützkonstruktion auf, welche wesentlich aus einem hohlen Kreiszylinder besteht, also aus einer Röhre. Zwischen der Stützkonstruktion und der dauerklebenden Klebeschicht befindet sich vorzugsweise eine schaumartige, elastische Trägerschicht, welche den für die Druckform nötigen Gesamtumfang herstellt und weitere vorteilhafte mechanische Eigenschaften der Druckform gewährleistet, so etwa die Elastizität der Druckoberfläche. Damit ist die erfindungsgemäße Druckform beispielsweise auch für den Flexodruck einsetzbar.

In einer vorteilhaften Ausführungsform der Erfindung ist die Druckschicht peelbar. Das Abpeelen der Druckschicht basiert auf einem Adhäsionsversagen zwischen Druckschicht und Klebeschicht. Die Peelbarkeit der Druckschicht bedeutet folglich, dass die Druckschicht durch ein mittels Zugkraft ausgelöstes Adhäsionsversagen von der Klebeschicht abgelöst werden kann. Dabei wird die Klebeschicht nicht beschädigt. Üblicherweise wird beim Peelen der Druckschicht ein kleiner Riss oder ein Schnitt in die Druckschicht angebracht, wodurch ein Ansatzpunkt für ein im Wesentlichen zerstörungsfreies Ablösen der Druckschicht von der Klebeschicht geschaffen wird. Die Peelbarkeit wird insbesondere dadurch erreicht, dass bei der Herstellung der Druckform gemeinsam mit der Druckschicht das Material zum Bilden der Druckschicht erst eine bestimmte Zeit lang aushärtet, bevor das Material zum Bilden der Klebeschicht eingebracht wird. Durch die Peelbarkeit der Druckschicht wird diese leicht entfernbar. Insbesondere muss die Druckschicht nicht wieder als ganzes Stück von der Druckform abgezogen werden.

In einer weiteren vorteilhaften Ausführungsform der Erfindung weist die Druckschicht eine Dicke zwischen 0,5 mm und 2 mm auf. Damit ist die Druckschicht dick genug, um die Aufnahme eines Druckmotivs mittels Eingravur zu gestatten. Sie erlaubt gleichzeitig auch ein einfaches Überstülpen und Entfernen der Druckschicht.

In noch einer vorteilhaften Ausführungsform der Erfindung besteht die Klebeschicht aus einem Silikon. Dies hat die technische Wirkung, dass die Klebeschicht vorteilhafte mechanische Eigenschaften, wie beispielsweise Elastizität, zur Aufnahme und Fixierung der Druckschicht aufweist und die Klebeschicht sich auf einfache Weise in einem Schleudergussverfahren herstellen lässt.

In einer weiteren vorteilhaften Ausführungsform der Erfindung weist die Klebeschicht eine Dicke von 0,5 bis 3 mm, insbesondere von 1 mm, auf. Dadurch wird für die Klebeschicht eine für die Aufnahme der Druckschicht geeignete Elastizität sichergestellt.

Gemäß einer zweiten Lehre der Erfindung wird ein Verfahren zur Herstellung einer Druckform für den Rotationsdruck, insbesondere für den flexiblen Tiefdruck, bei welchem eine Stützkonstruktion koaxial in eine zylinderförmige Gießform eingebracht wird, wodurch ein Hohlraum zwischen der Außenfläche der Stützkonstruktion und der Innenwand der Gießform erzeugt wird, bei welchem der Hohlraum mit Hilfe von jeweils einem an den Enden der Stützkonstruktion angebrachten Ringelement seitlich abgeschlossen wird, dadurch weiterentwickelt, dass in einem Verfahrensschritt flüssiges Material in den Hohlraum zum Bilden einer Klebeschicht eingebracht wird, dass die Stützkonstruktion gemeinsam mit der Gießform in Rotation versetzt wird, wodurch das flüssige Material gleichmäßig in dem Hohlraum verteilt wird und dass das flüssige Material zu einer dauerklebenden Klebeschicht ausgehärtet wird.

Dadurch, dass die Herstellung der Druckform in einer einzigen Form erfolgt, welche aus einem aus der Innenwand der Gießform und der Außenfläche der walzenförmigen Stützkonstruktion gebildeten Hohlraum besteht, wird eine einfache und kostengünstige Herstellung der Druckform ermöglicht.

Das erfindungsgemäße Verfahren ist im Wesentlichen ein Schleudergussverfahren, bei dem das flüssige Material für die Klebeschicht und für die Druckschicht durch Öffnungen in den Ringelementen, welche in axialer Richtung den Hohlraum abschließen, in diesen Hohlraum eingebracht wird. Dabei werden die Schichten in der Reihenfolge von außen nach innen hergestellt. Im Anschluss an die Herstellung der Klebeschicht im Schleudergussverfahren wird eine Trägerschicht zwischen der Stützwalze und der Innenseite der Klebeschicht in dem Hohlraum durch Aufschäumen hergestellt.

Die Druckform kann nach dem erfindungsgemäßen Verfahren entweder so hergestellt werden, dass sie bereits die flexible Druckschicht als äußere Druckschicht aufweist oder alternativ so, dass die dauerklebende Klebeschicht die äußere Schicht darstellt. In diesem Fall wird eine separat hergestellte flexible Druckschicht über die Dauerklebeschicht der Druckform gestülpt. Bei der Verfahrensvariante, bei welcher die dauerklebende Klebeschicht die äußere Schicht der hergestellten Druckform bildet, wird im Vergleich zu dem Herstellungsverfahren mit Druckschicht als äußerer Schicht eine Gießform mit kleinerem Durchmesser verwendet. Dies dient dem Zweck, dass in beiden Fällen die komplette Druckform mit Druckschicht insgesamt den gleichen Durchmesser aufweist.

Für die Druckschicht, die dauerklebende Klebeschicht und mögliche weitere Schichten, welche im Schleudergussverfahren hergestellt werden, wird sukzessive flüssiges Material in den Hohlraum eingebracht, dieser verschlossen und die Gießform in Rotation versetzt, wodurch sich das flüssige Material entweder an der Innenwand der Gießform oder, falls es sich nicht um die äußerste Schicht handelt, an der Innenfläche der unmittelbar vorher hergestellten Schicht verteilt. Dabei wird der Hohlraum durch das flüssige Material nicht vollständig ausgefüllt, um Raum für die weiteren Schichten zu lassen.

Zwischen der dauerklebenden Klebeschicht oder einer etwaigen weiteren Schicht unter der dauerklebenden Klebeschicht, welche im Schleudergussverfahren hergestellt wurde, und der walzenförmigen Stützkonstruktion wird eine separate, elastische Trägerschicht ausgebildet, weswegen bei der Herstellung der Dauerklebeschicht nur so viel flüssiges Material für die Klebeschicht in den Hohlraum eingebracht wird, dass diese den Hohlraum nicht vollständig ausfüllt. Diese Trägerschicht wird durch Aufschäumen und anschließendes Aushärten des Materials zum Bilden der elastischen Trägerschicht hergestellt.

Die Herstellung der Druckschicht und der dauerklebenden Klebeschicht im Schleudergussverfahren bewirkt, dass diese Schichten sowohl eine glatte und gleichmäßige Außenoberfläche, als auch eine eben solche Innenoberfläche aufweisen. Damit erübrigt sich ein nachträgliches Schleifen.

In einer weiteren vorteilhaften Ausführungsform der Erfindung besteht das flüssige Material zum Bilden der Klebeschicht aus einem Silikon. Silikon ist für ein Schleudergussverfahren besonders gut eignet, weil es in flüssigem Zustand leicht in die Gießform einzubringen ist und sich einfach aushärten lässt. Silikone mit klebender Oberfläche sind grundsätzlich bekannt.

Gemäß einer dritten Lehre der Erfindung wird eine flexible Druckschicht für eine Druckform für den Rotationsdruck, insbesondere für den flexiblen Tiefdruck, wobei die Druckschicht wesentlich eine Röhrenform aufweist, wobei die Druckschicht zur Eingravierung eines Druckmotivs geeignet ist und wobei die Druckschicht nahtlos ist, dadurch weiterentwickelt, dass die Druckschicht elastisch über eine Druckform überstülpbar ist. Damit ist eine separate Herstellung der Druckschicht ermöglicht. Die Druckschicht kann als Verschleißteil entsprechend auch separat ausgetauscht werden, was preiswerter ist als ein Austausch der gesamten Druckform.

In einer vorteilhaften Ausführungsform der Erfindung ist die Druckschicht peelbar. Damit lässt sich die Druckschicht einfacher von der Druckform entfernen als im Falle der Notwendigkeit eines Abziehens der Druckschicht als ganzes Stück.

Gemäß einer vierten Lehre der Erfindung wird ein Verfahren zur Herstellung einer flexiblen Druckschicht für eine Druckform für den Rotationsdruck, insbesondere für den flexiblen Tiefdruck, mit Hilfe einer zylinderförmigen Gießform mit einem Hohlraum, dadurch weiterentwickelt, dass flüssiges Material in den Hohlraum zum Bilden einer flexiblen Druckschicht eingebracht wird, dass die Gießform in Rotation versetzt wird, wodurch das flüssige Material gleichmäßig in dem Hohlraum verteilt wird, dass das flüssige Material zu einer flexiblen Druckschicht ausgehärtet wird und dass die flexible Druckschicht einzeln aus der Gießform entfernt wird. Dieses Verfahren erlaubt die einfache und kostengünstige Herstellung von Druckschichten zum Austausch für Druckformen in einem Schleudergussverfahren.

Es kann auch dieselbe Gießform für die separate Herstellung der flexiblen Druckschicht verwendet werden, die auch zur Herstellung der vollständigen Druckform geeignet ist. In diesem Fall kann auf die walzenförmige Stützkonstruktion bei der Herstellung verzichtet werden. Damit kann die bereits vorhandene Gießform für die Herstellung der flexiblen Druckschicht wiederverwendet werden.

Es gibt nun eine Vielzahl von Möglichkeiten, die erfindungsgemäße Druckform, das erfindungsgemäße Verfahren zur Herstellung der Druckform, die erfindungsgemäße flexible Druckschicht und das erfindungsgemäße Verfahren zur Herstellung der flexiblen Druckschicht auszugestalten und weiterzubilden. Hierzu wird beispielsweise verwiesen einerseits auf die den Patentansprüchen 1, 4 und 6 nachgeordneten Patentansprüche und andererseits auf die Beschreibung der Ausführungsbeispiele in Verbindung mit der Zeichnung.

In der Zeichnung zeigt
- Fig. 1: einen Längsschnitt eines Ausführungsbeispiels einer erfindungsgemäßen zylinderförmigen Gießform mit einer in der Gießform angeordneten zylinderförmigen Stützkonstruktion, zwei Ringelementen und mit einem sich dadurch bildenden Hohlraum,
- Fig. 2: eine perspektivische Ansicht eines Ausführungsbeispiels einer erfindungsgemäßen Druckform mit einer erfindungsgemäßen Druckschicht,
- Fig. 3: eine perspektivische Ansicht eines Ausführungsbeispiels einer erfindungsgemäßen Druckform mit Durchgangsbohrungen in den Ringelementen und
- Fig. 4: eine perspektivische Ansicht eines Ausführungsbeispiels einer erfindungsgemäßen Druckform während auf die Druckform ein erfindungsgemäßer Oberflächenüberzug übergestülpt wird.

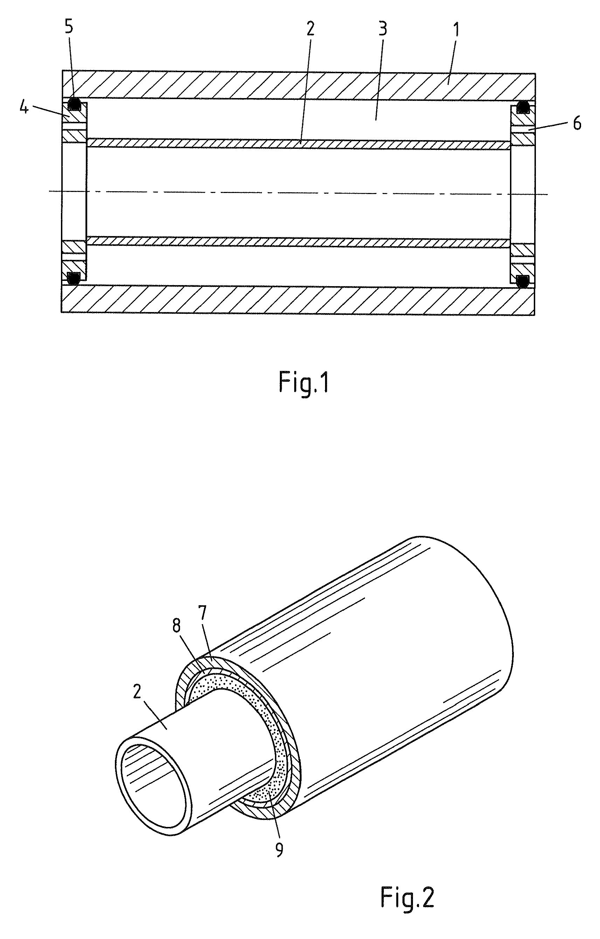

In Fig. 1 ist ein Längsschnitt eines Ausführungsbeispiels einer erfindungsgemäßen zylinderförmigen Gießform 1 dargestellt, in der eine zylinderförmige Stützkonstruktion 2 koaxial in die Gießform 1 eingebracht ist, wobei ein Hohlraum 3 zwischen der Außenfläche der Stützkonstruktion 2 und der Innenwand der Gießform 1 gebildet wird und der Hohlraum 3 durch jeweils ein an den Enden der Stützkonstruktion 2 angebrachtes Ringelement 4 seitlich abgeschlossen wird. Die walzenartige Stützkonstruktion 2 besteht beispielsweise aus einem Glasfaserwerkstoff. Zur Abdichtung des Hohlraums 3 sind zwischen der Gießform 1 und den Ringelementen 4 Dichtungen 5 vorgesehen. Die Ringelemente 4 weisen jeweils zwei Durchgangsbohrungen 6 auf, durch die flüssiges Material zum Bilden von einer Schicht oder zum Bilden von mehreren Schichten im Schleudergussverfahren in den Hohlraum 3 eingebracht werden kann. Ferner kann durch die Durchgangsbohrungen 6 auch Material zum Aufschäumen einer Schicht in den Hohlraum 3 gebracht werden.

In einem ersten Schritt wird flüssiges Material zum Bilden der flexiblen Druckschicht in den Hohlraum 3 eingebracht und zwar in einer Menge, die den Hohlraum 3 nicht vollständig ausfüllt. Dieses flüssige Material ist ein Silikon. Die Durchgangsbohrungen 6 werden dicht verschlossen. Dies geschieht entweder durch das in den Durchgangsbohrungen 6 verbleibende, auf Grund des Kontaktes mit der Umgebungsluft vorzeitig aushärtende, flüssige Material selbst oder durch in den Durchgangsbohrungen 6 eingesetzte Stopfen. Dadurch wird verhindert, dass Material aus dem Hohlraum 3 entweicht und gleichzeitig wird erreicht, dass die Eigenschaften der flexiblen Druckschicht genau eingestellt werden können.

Anschließend wird die Gießform 1 zusammen mit der Stützkonstruktion 2 in Rotation versetzt, so dass sich durch die Zentrifugalkraft das flüssige Material an der Innenfläche der Gießform 1 im Hohlraum 3 gleichmäßig verteilt. Danach wird die so hergestellte flexible Druckschicht ausgehärtet.

Nach der Aushärtezeit der Druckschicht wird flüssiges Material zum Bilden einer Klebeschicht in den Hohlraum 3 eingebracht, ebenfalls in einer den Hohlraum 3 nicht ausfüllenden Menge. Die entsprechenden Schritte des Verschließens des Hohlraums 3, der Rotation und des Aushärtens schließen sich an, wobei je nach jeweiliger Aushärtezeit der Druckschicht und der dauerklebenden Klebeschicht die Peelbarkeit der Druckschicht eingestellt wird.

Ein denkbarer vorangehender Verfahrensschritt ist die Herstellung einer oder mehrere weiterer Schichten oberhalb oder unterhalb der Klebeschicht. Hierzu wird entweder vor oder nach dem Herstellen der dauerklebenden Klebeschicht das jeweilige flüssige Material zum Bilden dieser Schichten eingebracht, geschleudert und ausgehärtet.

Nach dieser Aushärtezeit wird flüssiges Material zum Bilden einer elastischen Trägerschicht in den Hohlraum 3 eingeschäumt. Dieses Material wird ebenfalls ausgehärtet, damit sich aus dem Schaum die elastische Trägerschicht formen kann.

Durch zusätzliche entsprechende Schleudergussschritte können weitere Schichten zwischen der Druckschicht und der Trägerschicht oder sogar zwischen der Trägerschicht und der Stützkonstruktion hergestellt werden.

Die fertige Druckform wird aus der Gießform 1 entnommen und anschließend wird mittels eines Lasers die gewünschte Struktur bzw. das gewünschte Druckmotiv in die Druckschicht eingraviert.

In Fig. 2 ist eine perspektivische Ansicht eines Ausführungsbeispiels einer erfindungsgemäßen Druckform mit einer erfindungsgemäßen Druckschicht 7 dargestellt. Diese Druckform wurde als Ganzes mit ihrer elastischen Trägerschicht 9, der dauerklebenden Klebeschicht 8 und der flexiblen Druckschicht 7 in einer Gießform 1 durch ein sukzessives Schleudergussverfahren für die Schichten 7, 8 und ein Schäumverfahren für die Erzeugung der Schicht 9 auf der Stützkonstruktion 2 hergestellt.

Soll die Druckform für ein neues Druckmotiv verwendet werden, oder muss das aktuelle Druckmotiv wegen Abnutzung der flexiblen Druckschicht 7 erneuert werden, wird die Druckschicht 7 abgepeelt. Dies geschieht durch Abziehen der Druckschicht 7 von der dauerklebenden Klebeschicht 8, wobei die Klebeschicht 8 nicht beschädigt wird. Anschließend wird eine neue Druckschicht 7 über die Druckform übergestülpt und das zu verwendende Druckmotiv auf die Druckschicht 7 eingraviert.

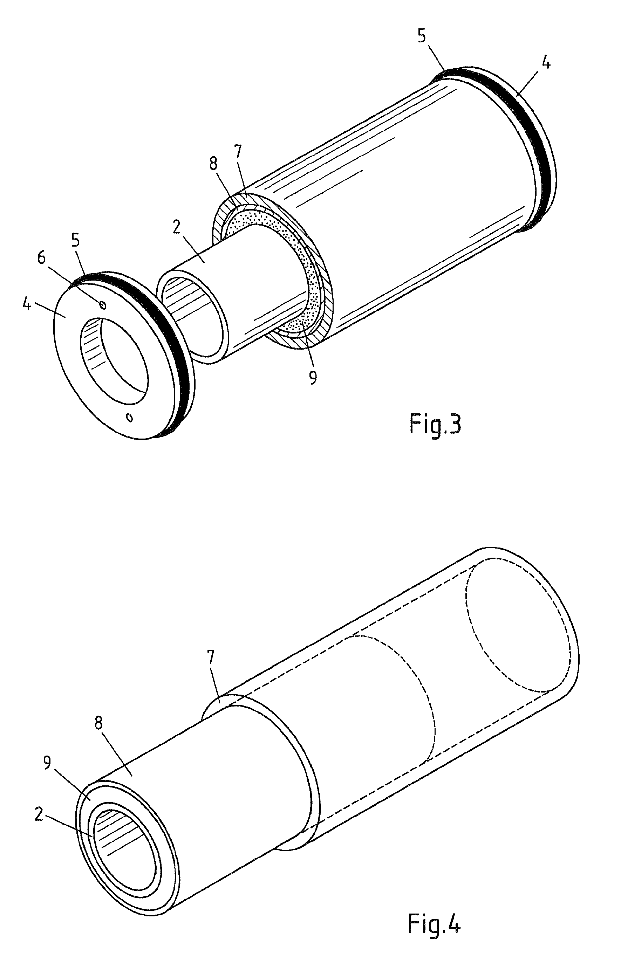

In Fig. 3 ist die perspektivische Ansicht eines Ausführungsbeispiels einer erfindungsgemäßen Druckform für den Rotationsdruck, dargestellt mit einer Stützkonstruktion 2, mit einer elastischen Trägerschicht 9, mit einer dauerklebenden Klebeschicht 8 und mit einer flexiblen Druckschicht 7. Die Druckschicht weist eine Dicke zwischen 0,5 mm und 2 mm auf. Die Klebeschicht weist hier eine Dicke von 1 mm auf.

Die Dicke der Trägerschicht 9 zusammen mit der Dicke der dauerklebenden Klebeschicht 8 entspricht der Höhe der beim Schleuderguss an den Hohlraum 3 angrenzenden Ringelemente 4, so dass die dauerklebende Klebeschicht 8 an der Kante entsprechend dem äußeren Durchmesser der Ringelemente 4 abschließt. Die flexible Druckschicht 7 erstreckt sich von der Kante entsprechend dem äußeren Durchmesser der Ringelemente 4 bis zu der Kante entsprechend dem äußeren Durchmesser der auf den Ringelementen 4 angeordneten Dichtungen 6. Dadurch kann die Druckschicht 7 leicht, ohne weitere Hilfsmittel, von der auf der Trägerschicht 9 angeordneten dauerklebenden Klebeschicht 8 abgepeelt werden, da die Druckschicht 7 nicht an dem Metall der Ringelemente 4 anhaftet.

Es ist aber auch möglich, dass die flexible Druckschicht 7 ebenfalls an dem Metall der Ringelemente 4 angrenzt. Dann wird beim Abpeelen der flexiblen Druckschicht 7 diese zuvor mit Hilfe beispielsweise eines Trennmessers von den Ringelementen 4 gelöst.

In Fig. 4 ist eine perspektivische Ansicht eines Ausführungsbeispiels einer erfindungsgemäßen Druckform dargestellt, auf die eine erfindungsgemäße Druckschicht 7 übergestülpt wird. Die Druckform mit ihrer elastischen Trägerschicht 9 und der dauerklebenden Klebeschicht 8 wurde in einer Gießform 1 durch ein sukzessives Schleudergussverfahren für die Schichten 7, 8 und durch Aufschäumen für die Schicht 9 auf der Stützkonstruktion 2 hergestellt. Die Druckschicht 7 wurde hier ebenfalls in einem Schleudergussverfahren in einer Gießform 1 hergestellt, jedoch separat von der Druckform. Nun wird die flexible Druckschicht 7 der Druckform übergestülpt, wobei die dauerklebende Klebeschicht 8 den übergestülpten Oberflächenüberzug 7 durch Adhäsion fixiert.

Dabei ist der Innendurchmesser der Druckschicht 7 in entspanntem Zustand vorzugsweise kleiner als der Außendurchmesser der Klebeschicht 8. Hierdurch steht die Druckschicht 7 unter Spannung, wenn sie sich auf der dauerklebenden Klebeschicht 8 befindet. Dies hat den Effekt, dass zusätzlich zu der Klebewirkung der Klebeschicht 8 auch diese Spannung zur Fixierung der Druckschicht 7 beiträgt.

## Patentansprüche

1. Druckform für den Rotationsdruck, insbesondere für den flexiblen Tiefdruck, mit einer Stützkonstruktion (2), mit mindestens einer flexiblen Druckschicht (7), wobei die Druckschicht (7) zur Eingravierung eines Druckmotivs geeignet ist, wobei die Druckschicht (7) nahtlos ist, **dadurch gekennzeichnet, dass** die Druckform mindestens eine dauerklebende Klebeschicht (8) aufweist, wobei die dauerklebende Klebeschicht (8) zwischen der Stützkonstruktion (2) und der Druckschicht (7) angeordnet ist.

2. Druckform nach Anspruch 1,
**dadurch gekennzeichnet, dass** die Druckschicht (7) peelbar ist.

3. Druckform nach Anspruch 1 oder 2,
**dadurch gekennzeichnet, dass** die Klebeschicht (8) aus einem Silikon besteht.

4. Verfahren zur Herstellung einer Druckform für den Rotationsdruck, insbesondere für den flexiblen Tiefdruck, bei welchem eine Stützkonstruktion (2) koaxial in eine zylinderförmige Gießform (1) eingebracht wird, wodurch ein Hohlraum (3) zwischen der Außenfläche der Stützkonstruktion (2) und der Innenwand der Gießform (1) erzeugt wird, bei welchem der Hohlraum (3) mit Hilfe von jeweils einem an den Enden der Stützkonstruktion (2) angebrachten Ringelement (4) seitlich abgeschlossen wird,
**dadurch gekennzeichnet, dass** in einem Verfahrensschritt flüssiges Material in den Hohlraum (3) zum Bilden einer Klebeschicht eingebracht wird, dass die Stützkonstruktion (2) gemeinsam mit der Gießform (1) in Rotation versetzt wird, wodurch das flüssige Material gleichmäßig in dem Hohlraum (3) verteilt wird und dass das flüssige Material zu einer dauerklebenden Klebeschicht ausgehärtet wird.

5. Verfahren nach Anspruch 4,
**dadurch gekennzeichnet, dass** das flüssige Material zum Bilden einer Klebeschicht aus einem Silikon besteht.

6. Flexible Druckschicht (7) für eine Druckform für den Rotationsdruck, insbesondere für den flexiblen Tiefdruck, wobei die Druckschicht (7) wesentlich eine Röhrenform aufweist, wobei die Druckschicht (7) zur Eingravierung eines Druckmotivs geeignet ist, wobei die Druckschicht (7) nahtlos ist,
**dadurch gekennzeichnet, dass** die Druckschicht (7) elastisch über eine Druckform überstülpbar ist.

7. Verfahren zur Herstellung einer flexiblen Druckschicht für eine Druckform für den Rotationsdruck, insbesondere für den flexiblen Tiefdruck, mit Hilfe einer zylinderförmigen Gießform (1) mit einem Hohlraum (3),
**dadurch gekennzeichnet, dass** flüssiges Material in den Hohlraum (3) zum Bilden mindestens einer flexiblen Druckschicht eingebracht wird, dass die Gießform (1) in Rotation versetzt wird, wodurch das flüssige Material gleichmäßig in dem Hohlraum (3) verteilt wird, dass das flüssige Material zu einer flexiblen Druckschicht ausgehärtet wird und dass die flexible Druckschicht aus der Gießform (1) entfernt wird.
